# EUROPEAN PATENT APPLICATION

(11) **EP 2 153 726 A1**
(43) Date of publication of application: **17.02.2010**
(21) Application number: 09167104.0
(22) Date of filing: 03.08.2009
(51) Int. Cl.: A21D 13/00, A23L 1/00, A23L 1/212

(54) **Biscuit containing fruit-based material**

(30) Priority: 04.08.2008 GB 0814219
(71) Applicant: UNITED BISCUITS (UK) LIMITED, Hayes, Middlesex UB4 8EE (GB)
(72) Inventor: Thomson, Darren James, Edinburgh, EH6 6PR (GB); Plows, Jodie, Amersham, Buckinghamshire, HP7 9BL (GB); Commins, Susan Jacqueline, High Wycombe, HP13 5HZ (GB); McNab, Tara Carolyne, London, W11 4BP (GB); Webster, Tracey Jane, Warfield, Berkshire, RG42 2QU (GB)
(74) Representative: Humphreys, Ceris Anne

(57) **Abstract**

A biscuit comprises an outer portion and a filling, wherein the filling comprises a fruit-based material obtainable by concentration of at least 40 grams of fresh fruit, optionally from at least 80 grams of fresh fruit. The biscuits are able to provide a useful contribution in increasing the daily fruit intake of consumers who are reluctant to eat fresh fruit.

## Description

This invention relates to biscuits comprising fruit-based fillings. The invention also relates to processes for making such biscuits.

It is well understood that eating sufficient quantities of fruit and vegetables is an essential part of a healthy, balanced diet. It has been recommended that individuals consume at least five portions of fruit and vegetables a day, and that, by doing so, the risk of susceptibility to diseases such as cancer or heart disease could be reduced. One portion of fruit or vegetables has been defined as being approximately 80 grams. The term "daily portion" as used below refers to an 80g portion of fresh fruit or a portion of certain processed forms of fruit which provide a substantially similar nutritional content to an 80 gram portion of the corresponding fresh fruit.

Different types of fruit and vegetables contain different combinations of fibre, vitamins, minerals and other nutrients. These types of fruit and vegetables include fresh fruit, dried fruit, tinned fruit, fruit juices, green vegetables, cooked vegetables, salad vegetables, tinned and frozen vegetables, and pulses and beans. Fruit or vegetable products that have been treated, for example, by drying, preserving, canning, cooking or any other process, may lose a substantial proportion of the principal nutrients present in the fruit or vegetable when fresh. The term "fresh" where used herein in relation to fruit is to be understood as referring to any fruit which has not been subjected to a processing step, for example, a drying, preserving, canning or cooking step. For the avoidance of doubt, "fresh fruit" is to be understood as including fruit which has been stored in a protective atmosphere provided that the length of storage and storage conditions are not such that the nutritional content of the fruit is materially detrimentally affected.

Fruit or vegetables may be consumed on their own or incorporated into another product. One food product in which it is known to incorporate fruit material is biscuits (the term "biscuit" as used herein being understood as including "cookie"), which may contain discrete fruit pieces, for example, currants, or a filling comprising fruit-based material. Examples of such biscuits include fig rolls, Garibaldi biscuits and Crispy Fruit Slices (trade mark). However, the known biscuits contain relatively low quantities of fruit-based material and consumption of a typical serving of two biscuits would result in consumption of fruit-based material in amounts equivalent to considerably less than an 80g daily portion of fresh fruit.

Many consumers consider biscuits to be more interesting than fruit or fruit products, and therefore tend to eat biscuits in preference to such products. Biscuits are also considered by many consumers to be convenient for eating "on the go", being typically provided in conveniently packaged form and edible without preparation and without leaving any "messy" waste. Average consumption of fruit and vegetables typically falls well below the recommended five portions per day. There is a need for a biscuit which contains a greater quantity of fruit per biscuit. Consumption of such a biscuit would result in the consumption of a greater quantity of fruit nutrients per biscuit. Such a biscuit would be beneficial in particular, for example, for increasing the fruit intake of consumers who are reluctant to eat fresh fruit but would benefit from a greater amount of fruit in their diet.

Fillings which comprise fruit-based material are commercially available for a variety of uses. They are typically made using concentrated juices and purees. Additional ingredients such as sugars, alginates and pectins may be added to give texture, bake-stability and shelf life. Normal production involves boiling the mixture to get the desired sugar level. In the case of fillings containing high levels of fruit-based material, extended boiling is typically required, and this is destructive to some of the principal nutrients.

The invention provides a biscuit comprising an outer portion and a filling, wherein the filling comprises a fruit-based material obtainable by concentration of at least 40 grams of fresh fruit.

A serving of the biscuits of the present invention advantageously contains sufficient fruit-based material to provide at least one of the recommended daily portions of fruit and vegetables. A "serving" as used herein in relation to biscuits is to be understood as referring to no more than two biscuits. In that way, the consumer will be able to obtain, from eating two, or even one, biscuit, a material proportion of the desirable fruit or vegetable component of their diet, for example an amount substantially equivalent to a daily portion of fresh fruit.

In certain embodiments, the filling comprises a fruit-based material obtainable by concentration of at least 80 grams of fresh fruit. In the biscuit of the present invention, the filling advantageously comprises a fruit-based material obtainable by concentration or other treatment of not more than 120 grams of fresh fruit.

In certain preferred embodiments, the filling comprises a fruit-based material obtainable by concentration or other treatment of from 40 to 75 grams fresh fruit. Preferably, the filling consists essentially of a fruit-based material obtainable by concentration or other treatment of from 40 to 75 grams fresh fruit, the filling optionally containing up to 40% by weight, for example up to 30%, preferably up to 10%, more preferably up to 5% by weight, of added ingredients. In order to obtain the fruit-based material used in accordance with the invention, it is advantageous (although not essential) for the concentration or other treatment of the fresh fruit to be carried out under conditions which are substantially non-destructive to principal nutrients.

The filling may be obtainable from a single type of fruit or from at least two different types of fruit, for example from two to ten different types of fruit, preferably from two to eight different types of fruit. In one embodiment the filling is obtainable from a single type of fruit. In another embodiment, the filling is obtainable from at least two different types of fruit. Other embodiments may use, by way of illustration, four or seven fruits.

The filling may be obtainable from any type of fruit known in the art. Preferably, the filling is obtainable from at least one type of fruit selected from the group consisting of apples, pineapples, plums, pears, figs, peaches, cherries, bananas, strawberries, raspberries, blackberries, blackcurrants, elderberries, blueberries, cranberries and mixed berries.

In practice, the filling advantageously comprises a puree made by concentrating one or more fruits or comprises a plurality of purees of different fruits. The puree will typically be made by preparing the fresh fruit and then effecting removal of a desired amount of water, for obtaining a concentrated puree of a desired concentration factor as compared with the fresh fruit. The concentration factor (that is, the ratio of the weight of the fresh fruit to the weight of the puree obtained from that fresh fruit) preferably exceeds 1, and is advantageously from 1 to 7, preferably from 1 to 6, especially from 2 to 6. If desired, a mixture of fruit purees of different concentration factors may be used. Optionally, the filling may include, in addition to a concentrated fruit material, a fruit component that has not been subjected to concentration.

The use of fruit materials including fruits that have been substantially concentrated in this manner allows a biscuit of typical size to contain an amount of filling that is equivalent to, for example, three to seven times its weight of fresh fruit.

In one embodiment, the filling comprised in the biscuits of the present invention is obtainable from fruit juice concentrate. In another embodiment, the filling is obtainable from fruit puree concentrate. If desired, the fruit material may include fruit-derived pieces.

The filling may also contain additional ingredients. Preferably, the filling comprises at least one added ingredient selected from the group of ingredients consisting of gelling agents, thickening agents, stabilisers, preservatives, and flavourings. For example, the filling may include one or more added ingredients selected from sugars, sugar syrups, alginates, polyols such as glycerol, and pectins. Added ingredients, where present, will generally be present in a total amount not exceeding 40%, and preferably not exceeding 30%, for example not exceeding 10%, of the total weight of the filling. Thus, preferably, the filling comprises at least 60%, more preferably at least 70% of a fruit-based material, for example a fruit puree, obtainable by concentration of fresh fruit.

The biscuit of the present invention comprises an outer portion and a filling. Preferably, the outer portion consists essentially of a baked biscuit dough. In one embodiment the biscuit dough is a white flour dough. In another embodiment the biscuit dough is a wholemeal flour dough.

Preferably, the outer portion comprises not more than 60%, for example not more than 50% by weight of the total weight of the biscuit. More preferably, the outer portion comprises not more than 40% by weight of the total weight of the biscuit.

Preferably, the filling comprises at least 40% by weight of the total weight of the biscuit. More preferably, the filling comprises at least 50% by weight of the total weight of the biscuit. Still more preferably, the filling comprises at least 55% by weight, for example, 60% by weight, of the total weight of the biscuit. Before baking, the weight ratio of biscuit dough to filling is advantageously not exceeding 55:45, preferably not exceeding 50:50, for example 45:55. Typically, the ratio is not not less than 35:65. Whilst the ratio of dough to filling is not changed to a great extent during baking, the water loss from the biscuit outer will typically exceed slightly the water loss from the filling. The weight ratio of outer to filling in the biscuit after baking is advantageously not exceeding 55:45, preferably not exceeding 50:50.

Advantageously, the total weight of the biscuit is not more than 50 grams. For example, the total weight of the biscuit may be not more than 40 grams. Preferably, the total weight of the biscuit is not more than 35 grams. In certain embodiments, the total weight of the biscuit may be not more than 30 grams, for example, not more than 25 grams, especially not more than 20 grams. In one preferred embodiment, the total weight of the biscuit is in the range of from 8 to 30 grams, for example 10 to 25 grams, preferably 10 to 20 grams, especially 15 to 25 grams and the weight of the filling is in the range of from 5 to 20 grams. Illustrative preferred ranges of filling weight in such a biscuit are 6 to 18g, for example 6 to 14 grams, especially 6 to 12 grams; or 10 to 18 grams. In one preferred embodiment, the weight of the biscuit is from 14 to 16g, and the weight ratio of outer to filling is from 45:55 to 55:45. In that case for example, the filling weight may be 6.5 to 8.5g and the weight of the outer from 7 to 8g. In another preferred embodiment, the total weight of the biscuit is in the range of 25 to 50 grams, for example 25 to 40 grams, preferably 30 to 40 grams, and the weight of the filling is 10 to 25 grams, for example 15 to 25 grams.

Preferably, the weight of the filling is not more than 25 grams. Preferably, the weight of the filling is at least 6g, more preferably at least 8 grams. Thus, the weight of the filling may advantageously be from 6 to 25 grams, especially from 8 to 25 grams. More preferably, the weight of the filling is at least 10 grams, for example in the range of from 10 to 20 grams, especially from 14 grams to 18 grams.

The inventors have found that, surprisingly, by use of fruit-based material that has been concentrated and by carefully selecting the relative proportions of dough and filling, it is possible to make a biscuit which provides the equivalent of at least half, and in some cases an entire, daily portion of fruit.

In one embodiment of biscuit according to the invention, the filling is partly enclosed by the outer portion. In another embodiment, the filling is wholly enclosed by the outer portion.

The biscuit of the present invention is typically stored for a period of time prior to consumption. Preferably, the quantities of principal fruit nutrients present in the filling are substantially preserved for at least one week after baking. More preferably, the quantities of principal fruit nutrients present in the filling are substantially preserved for at least one month after baking. Still more preferably, the quantities of principal fruit nutrients present in the filling are substantially preserved for at least six months after baking.

The biscuits of the present invention may be produced in packs. In one embodiment, a pack contains one biscuit, the biscuit having a filling comprising a fruit-based material obtainable by concentration of at least 80 grams of fresh fruit. In another, preferred, embodiment a pack contains two biscuits. If desired, the packs containing individual biscuits or two biscuits may be combined with other packs of like size within a larger packet. It will be appreciated that a pack of two biscuits each containing a filling with a fruit-derived content equivalent to 40 grams of fresh fruit or of one biscuit containing a filling with a fruit-derived content equivalent to 80 grams of fresh fruit can provide a "daily portion".

The biscuits of the invention may be made by any suitable process. One suitable process comprises forming an extrudable biscuit dough, co-extruding the biscuit dough with the filling to form an extrudate having a filling body circumferentially enclosed by a sheath of the biscuit dough, cutting the extrudate into lengths, and baking the extrudate before or after it is cut into lengths. Another suitable process comprises forming a biscuit dough into a planar portion, depositing the filling onto the planar portion, folding the planar portion around the filling to obtain a filled portion and baking the filled portion. In order to form planar portions, the biscuit dough is preferably sheeted and a multiplicity of individual portions are cut therefrom. It is preferable but not essential that cutting of the biscuit dough occurs before depositing the filling.

In a further embodiment, a process is provided for making a biscuit according to the invention, wherein a biscuit dough portion is formed and baked to form the outer portion and, subsequent to baking, the filling is introduced into the outer portion.

In one advantageous form, a biscuit according to the invention comprises an outer portion and a filling, wherein the filling comprises a multiplicity of nutrients which substantially corresponds qualitatively and quantitatively to principal nutrients of at least 40 grams of fresh fruit. The principal nutrients of at least 40 grams of fresh fruit may be any of:
the vitamins, minerals, fruit sugars and fibre of at least 40 grams of fresh fruit;
the vitamins, minerals and fruit sugars of at least 40 grams of fresh fruit; or
the fibre content, fruit sugars and a major proportion of the vitamins and minerals of at least 40 grams of fresh fruit.

Fruit-based material retaining at least a major proportion, preferably substantially all or most principal nutrients of the fresh fruit may advantageously be obtained by concentrating the fruit (for example in the form of a puree) under conditions that are not detrimental to the nutritional content of the fruit.

Preferably, the filling is a bake-stable filling containing principal fruit nutrients and the quantities of principal fruit nutrients present in the filling are substantially preserved during baking of the biscuit.

The following Examples illustrate certain embodiments of the invention:

### Example 1: Biscuit with apple filling

An apple puree concentrate made from 2 kilograms of apples is made into 0.5 kilogram of a filling under conditions such that substantially all of the principal nutrients are retained. The filling is co-extruded from an extruder having a nozzle defining a central aperture for the filling and a further aperture circumferentially enclosing the central aperture, the further aperture being arranged to receive an extrudable white flour biscuit dough. The emerging biscuit dough/filling extrudate is cut to form individual biscuits of equal length. The biscuits are baked. Analysis of the baked biscuits indicates that the average biscuit weight is 17.5 grams, the average filling content is about 50 to 60% of the total weight, and that the quantities of a multiplicity of nutrients present in the filling of each biscuit correspond substantially to the principal nutrients found in a 40 gram serving of apple.

### Fruit Purees

Purees for use in biscuits according to the invention can be obtained from fresh fruit, where appropriate after removal of skin, cores or other waste parts, by concentration of the fresh fruit to obtain a fruit puree having a concentration factor in the range of from 1 to 7, especially 2 to 5 (a concentration factor of 1 indicating 1:1 weight equivalence with fresh fruit).

### Example 2: Biscuit with fruit filling

A biscuit dough was made from the ingredients listed in Table 1.

**Table 1: Dough ingredients**

| **Ingredient** | **% inc water** |
|---|---|
| Fat | 16.5 |
| Sugars/Sugar Syrups | 17.0 |
| Salt | 0.5 |
| water | 13.0 |
| Raising agents | 1.5 |
| Flour | 51.5 |

The fat, sugars, salt, and water were mixed. The flour and raising agents were added, and mixing continued to obtain the biscuit dough.

A fruit filling was made by mixing 75% fruit puree (mainly apple) with 25% sugar syrups. Taking account of the concentration factors of the fruit puree, the fruit filling contained the equivalent of about 535g fresh fruit per 100g filling.

The filling was co-extruded with the biscuit dough. The extruder die was provided with a central aperture for the filling and an annular aperture for extrusion of an envelope of biscuit dough around a central core of the filling. The relative flow rates of the dough and filling were arranged to result in a dough:filling ratio of about 50:50 by weight. The extruded composite body of dough and filling was cut, subsequent to extrusion, by a cutter associated with the extruder die. The cut pieces were flattened to form a slightly flattened cylindrical shape of dimensions 54 x 35 x 14 mm, following which the biscuits were baked. The size of the cut pieces was selected to give pre-baked biscuit preforms with a mean total weight of about 16g, made up of a filling weight of about 8g and about 8g of biscuit outer. The final biscuit weight after baking was about 15 g, of which 50% by weight was filling.

In each of the finished biscuits the fruit filling contained the equivalent of about 42.5g fresh fruit.

## Claims

1. A biscuit comprising an outer portion and a filling, wherein the filling comprises a fruit-based material obtainable by concentration of at least 40 grams of fresh fruit.

2. A biscuit according to claim 1, wherein the filling comprises a fruit-based material obtainable by treatment of at least 40 grams of fresh fruit.

3. A biscuit according to claim 1 or claim 2, wherein the filling comprises a fruit-based material obtainable by concentration of at least 80 grams of fresh fruit.

4. A biscuit according to any one of claims 1 to 3, wherein the outer portion consists essentially of a baked biscuit dough.

5. A biscuit according to any one of claims 1 to 4, wherein the filling comprises at least 40% by weight of the total weight of the biscuit.

6. A biscuit according to any one of claims 1 to 5, wherein the outer portion comprises not more than 50% by weight of the total weight of the biscuit.

7. A biscuit according to any one of claims 1 to 6, wherein the weight of the filling is in the range of from 6 grams to 20 grams.

8. A biscuit according to any one of claims 1 to 8, in which the biscuit has a total weight of from 10 to 20 grams, comprising from 6 to 14g outer and from 6 to 14g filling.

9. A biscuit according to any one of claims 1 to 11, wherein the filling is at least partly enclosed by the outer portion.

10. A biscuit according to any one of claims 1 to 9, in which the weight ratio of outer to filling is from 45:55 to 55:45.

11. A pack comprising two biscuits, each biscuit being as claimed in any one of claims 1 to 10.

12. A pack comprising one biscuit as claimed in any one of claims 1 tao 10, the biscuit having a fruit filling comprising a fruit-based material obtainable by concentration of at least 80 grams of fresh fruit

13. A process for making a biscuit according to any one of claims 1 to 10, comprising forming an extrudable biscuit dough, co-extruding the biscuit dough with the filling to form an extrudate having a filling body circumferentially enclosed by a sheath of the biscuit dough, cutting the extrudate into lengths, and baking the extrudate before or after it is cut into lengths.

14. A process for making a biscuit according to any one of claims 1 to 10, comprising forming a biscuit dough into a planar portion, depositing the filling onto the planar portion, folding the planar portion around the filling to obtain a filled portion and baking the filled portion.

15. A process according to claim 12 or claim 13, wherein the filling is a bake-stable filling containing principal fruit nutrients, the quantities of principal fruit nutrients present in the filling being substantially preserved during baking of the biscuit.

16. A process for making a biscuit according to any one of claims 1 to 10, wherein a biscuit dough portion is formed and baked to form the outer portion and, subsequent to baking, the filling is introduced into the outer portion.
